# FASCICULE DE BREVET EUROPEEN

(11) **EP 2 895 316 B1**
(45) Date de publication et mention de la délivrance du brevet: **03.01.2018**
(21) Numéro de dépôt: 13774735.8
(22) Date de dépôt: 11.09.2013
(51) Int. Cl.: B29C 70/32, B29C 70/38, B65H 18/00, B29C 53/56, B29C 53/80, B29C 53/82, B65H 23/032

(54) **MACHINE D'ENROULEMENT D'UNE TEXTURE FIBREUSE PERMETTANT UN CONTROLE D'ALIGNEMENT ET DE DECADRAGE PAR ANALYSE D'IMAGE**
MASCHINE ZUM WICKELN EINES FASERMATERIALS MIT DER MÖGLICHKEIT ZUR AUSRICHTUNGS- UND ZENTRIERVERSATZSTEUERUNG DURCH BILDANALYSE
MACHINE FOR WINDING A FIBROUS MATERIAL ENABLING ALIGNMENT AND OFF-CENTERING CONTROL BY IMAGE ANALYSIS

(30) Priorité: 17.09.2012 FR 1258678; 26.04.2013 FR 1353886
(43) Date de publication de la demande: 22.07.2015
(73) Titulaire: SNECMA, 75015 Paris (FR)
(72) Inventeur: CORRADINI, Sylvain, 77550 Moissy-Cramayel Cedex (FR); MATHON, Richard, 77550 Moissy-Cramayel Cedex (FR); DURAND, Jean-François, 12160 Baraqueville (FR); LEROYER, Bertrand, Pierre, Martin, 77550 Moissy-Cramayel Cedex (FR); PHELIPPEAU, Antoine, 77550 Moissy-Cramayel Cedex (FR)
(74) Mandataire: David, Alain
(86) Numéro de dépôt international: PCT/FR2013/052082
(87) Numéro de publication internationale: WO 2014/041295

(56) Documents cités:
- EP-A1- 2 199 069
- WO-A1-2012/140355
- FR-A1- 2 496 716
- FR-A1- 2 953 225
- US-A1- 2009 098 337

## Description

### Arrière-plan de l'invention

La présente invention se rapporte au domaine général de la réalisation de carters de turbine à gaz en matériau composite, et plus particulièrement de carters de rétention pour soufflante de turbine à gaz pour moteurs aéronautiques.

De façon courante, un carter de rétention de soufflante est formé par une paroi relativement mince définissant la veine d'entrée d'air dans le moteur et supportant un matériau abradable au droit de la trajectoire des sommets des aubes de soufflante et un revêtement de traitement acoustique éventuel, et par une structure de bouclier fixé sur cette paroi du côté extérieur, au niveau de la soufflante pour retenir les débris, tels que des objets ingérés ou des fragments d'aubes endommagées, projetés par la centrifugation, afin d'éviter qu'ils traversent le carter et atteignent d'autres parties de l'aéronef.

La réalisation d'un carter de rétention de soufflante en matériau composite a déjà été proposée avec la demande EP 2 199 069. On pourra aussi se référer au document EP 1,961,923 qui décrit la fabrication d'un carter en matériau composite à épaisseur évolutive comprenant la formation d'un renfort fibreux par des couches superposées d'une texture fibreuse et la densification du renfort fibreux par une matrice. Plus précisément, ce document prévoit d'utiliser un mandrin d'appel pour le tissage tridimensionnel de la texture fibreuse, celle-ci étant ensuite enroulée en couches superposées sur un mandrin d'imprégnation dont le profil correspond à celui du carter à fabriquer. La préforme fibreuse ainsi obtenue est maintenue sur le mandrin d'imprégnation et une imprégnation par résine est réalisée avant polymérisation.

En pratique, la mise en oeuvre de ce procédé pose le problème du transfert de la texture fibreuse depuis le mandrin d'appel vers le mandrin d'imprégnation et du contrôle de la position de la texture fibreuse en cours d'enroulement. En effet, une quelconque dérive de la position de la texture fibreuse pendant l'enroulement se traduirait par un manque local de tension, un décadrage et un taux de fibre hors tolérance qui rendrait alors la texture fibreuse inutilisable. Une solution à ce problème est connue avec WO 2012/140355.

Toutefois, le carter est réalisé par enroulement sur plusieurs tours de la préforme (typiquement quatre), ce qui interdit après enroulement de contrôler la position des traceurs de chaine (ceux permettant de suivre l'alignement), pour ces tours successifs. Il est donc impératif d'assurer le bon positionnement de texture fibreuse pendant l'enroulement, mais également de disposer d'un rapport de contrôle après enroulement permettant de certifier que cette texture fibreuse est conforme aux spécifications, ce qui suppose d'assurer également le contrôle intégral en temps réel du décadrage de la texture fibreuse.

Par conséquent, un besoin existe de disposer d'une machine d'enroulement permettant d'assurer, lors du transfert de la texture fibreuse depuis le mandrin d'appel vers le mandrin d'imprégnation, à la fois un placement et une application corrects de la texture fibreuse sur le mandrin d'imprégnation et un contrôle en temps réel de l'alignement et d'un éventuel décadrage de la texture fibreuse. En effet, après enroulement, il est impossible de contrôler la position et le décadrage de la texture fibreuse et il est alors impossible de valider l'opération d'enroulement.

### Objet et résumé de l'intention

La présente invention a donc pour but principal de pallier un tel besoin. Un autre but de l'invention est de permettre des analyses statistiques des données pour le suivi qualité des opérations d'enroulement. Ces buts sont atteints en proposant une machine d'enroulement d'une texture fibreuse sur un mandrin d'imprégnation, comprenant :
un mandrin d'appel pour stocker et dévider une texture fibreuse, le mandrin d'appel ayant un axe de rotation sensiblement horizontal ;
un mandrin d'imprégnation pour recevoir en couches superposées la texture fibreuse dévidée depuis le mandrin d'appel, le mandrin d'imprégnation ayant un axe de rotation sensiblement horizontal et parallèle à l'axe de rotation du mandrin d'appel ;
une caméra dirigée vers la texture fibreuse et le mandrin d'imprégnation pour scruter le passage de fils traceurs de chaine et de trame incorporés dans la texture fibreuse ;
un module d'analyse d'images pour tout d'abord déterminer les positions des intersections des fils traceurs de chaine avec les fils traceurs de trame successifs puis comparer ces positions déterminées avec des positions théoriques correspondantes d'intersections de fils traceurs de chaine et de trame de référence détectées, lors d'une phase d'étalonnage préalable à l'enroulement automatique de ladite texture fibreuse, par ladite caméra sur un mandrin de calibration marqué de fils traceurs de chaine et de trame de référence et enregistrées dans le module et enfin déterminer une valeur de décadrage de la texture fibreuse pour chacune de ces intersections;
des moteurs électriques pour entraîner en rotation les mandrins autour de leur axe de rotation respectif ; et
une unité de commande des moteurs électriques d'entraînement en rotation des mandrins.

Ainsi, en analysant en temps réel une image de la texture fibreuse, il est possible de contrôler un éventuel décadrage et désalignement de la préforme et d'invalider si besoin l'opération d'enroulement une fois réalisée.

Il en résulte une machine d'enroulement parfaitement adaptée à la réalisation de carters de rétention de soufflante en matériau composite pour moteur aéronautique. En particulier, le fonctionnement de cette machine peut être entièrement automatisé, ce qui contribue à diminuer le temps de cycle de fabrication de ces carters.

De préférence, l'unité de commande des moteurs électriques de la machine d'enroulement comprend des moyens de contrôle de la tension de la texture fibreuse. En l'occurrence, cette tension peut être mesurée via un capteur ou une mesure de consommation électrique. Par ce contrôle de la tension, et en fonction de la nature de la texture fibreuse, le taux de fibres de la préforme obtenue peut donc être déterminé et maîtrisé.

De préférence également, la caméra est montée dans une boite à lumière ajustée au profil dudit mandrin d'imprégnation et placée au plus près de ladite texture fibreuse et le module d'analyse d'images détermine en outre un écart de position entre une position de référence d'alignement et la position relevée par la caméra d'au moins un fil traceur de chaine et autorise ou non la poursuite de l'enroulement selon que la position relevée du fil traceur reste ou non dans un intervalle de tolérance prédéterminé. Avantageusement, une correction de l'alignement est réalisée au cours de l'opération d'enroulement en corrigeant la position du mandrin d'appel lorsque l'écart de position déterminé est supérieur à 25% de l'intervalle de tolérance prédéterminé, la correction de la position du mandrin d'appel étant assurée par une vis sans fin motorisée solidarisée à ce mandrin d'appel.

Selon le mode de réalisation envisagé, l'alignement (étalonnage) initial de la machine selon l'invention peut être réalisé soit avec un outillage de calibration soit avec un équipement de projection laser. L'outillage de calibration est marqué de fils traceurs de chaine et de trame de référence destinés à être détectés par ladite caméra lors d'une phase d'étalonnage préalable à l'enroulement automatique de ladite texture fibreuse. L'équipement de projection laser peut, en projetant sur la structure fibreuse au moins un fil traceur de chaine de référence, permettre à un opérateur d'une part d'aligner le mandrin d'appel sur le mandrin d'imprégnation préalablement à l'enroulement de la texture fibreuse sur le mandrin d'imprégnation et d'autre part de surveiller un défaut d'alignement du mandrin d'appel sur le mandrin d'imprégnation au cours de l'opération d'enroulement.

Avantageusement, l'équipement de projection laser est disposé sensiblement à la verticale du mandrin d'appel et peut être monté sur un portique supporté par un bâti de la machine, des cibles réfléchissantes étant positionnées sur le mandrin d'imprégnation pour en assurer une localisation dans l'espace et permettre la projection d'au moins un fil traceur de chaine de référence préalablement et au cours de l'opération d'enroulement. De préférence, les cibles réfléchissantes sont au nombre de six et réparties dans l'épaisseur de deux flaques latéraux du mandrin d'imprégnation.

L'invention concerne également un procédé de détermination d'une valeur de décadrage d'une texture fibreuse enroulée en couches superposées sur un second mandrin d'une machine comportant un premier mandrin pour stocker et dévider cette texture fibreuse, le premier mandrin ayant un axe de rotation sensiblement horizontal et parallèle à un axe de rotation du second mandrin, et les premier et second mandrins étant entrainés autour de leur axe de rotation respectif par des moteurs électriques actionnés par une unité de commande ; procédé dans lequel une caméra dirigée vers la texture fibreuse et le second mandrin scrute le passage de fils traceurs de chaine et de trame présents dans la texture fibreuse et un module d'analyse d'images détermine tout d'abord les positions des intersections des fils traceurs de chaine avec les fils traceurs de trame successifs puis compare ces positions déterminées avec des positions théoriques correspondantes d'intersections de fils traceurs de chaine et de trame de référence détectées, lors d'une phase d'étalonnage préalable à l'enroulement automatique de ladite texture fibreuse, par ladite caméra sur un mandrin de calibration marqué de fils traceurs de chaine et de trame de référence et enregistrées dans le module et enfin détermine une valeur de décadrage de la texture fibreuse pour chacune de ces intersections.

Selon le mode de réalisation envisagé, lesdits premier et second mandrins sont respectivement des mandrins d'appel et d'imprégnation d'une machine d'enroulement ou bien des mandrins de tirage et de prise d'une machine (ou métier) à tisser.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif et sur lesquels :
- la figure 1 est une vue en perspective d'une machine d'enroulement selon un premier mode de réalisation de l'invention ;
- la figure 2 est une vue de dessus d'une machine d'enroulement selon un second mode de réalisation de l'invention ;
- la figure 3 est une vue de coté de la machine d'enroulement des figures 1 ou 2 sans son unité de commande ;
- la figure 4 est une vue externe de la texture fibreuse montrant ses différents fils traceurs ;
- la figure 5 montre un graphique illustrant le contrôle de l'alignement de la texture fibreuse ; et
- la figure 6 montre un graphique illustrant le contrôle du décadrage de la texture fibreuse.

### Description détaillée de modes de réalisation

L'invention sera décrite ci-après dans le cadre de son application à la fabrication d'un carter de rétention de soufflante de moteur aéronautique à turbine à gaz dont un exemple de mis en oeuvre est décrit dans le document EP 1,961,923 auquel on pourra se référer.

Le carter est réalisé en matériau composite à renfort fibreux densifié par une matrice. Le renfort est en fibres par exemple de carbone, verre, aramide ou céramique et la matrice est en polymère, par exemple époxide, bismaléimide ou polyimide.

Brièvement, le procédé de fabrication décrit dans ce document consiste à réaliser une texture fibreuse par tissage tridimensionnel avec appel en chaîne sur un tambour (appelé ci-après mandrin d'appel) ayant un profil déterminé en fonction du profil du carter à fabriquer. Une fois tissée, cette texture fibreuse ou préforme s'apparente à un tapis sec.

La texture fibreuse ainsi réalisée est dévidée du mandrin d'appel pour être ensuite transférée et enroulée sur plusieurs tours (typiquement quatre plus une fraction de tour inférieure à ¼ de tour) sur le mandrin d'un moule d'injection de résine (appelé ci-après mandrin d'imprégnation) dont le profil extérieur correspond au profil interne du carter à fabriquer.

La texture fibreuse étant maintenue sur le mandrin d'imprégnation, une imprégnation est alors réalisée par une résine. A cet effet, une enveloppe formée par la jonction de plusieurs pièces est appliquée sur la texture fibreuse et la résine est injectée dans le moule ainsi constitué. L'imprégnation peut être assistée par établissement d'une différence de pression entre l'intérieur et l'extérieur du moule dans lequel se trouve la texture fibreuse. Après imprégnation, une étape de polymérisation de la résine est réalisée.

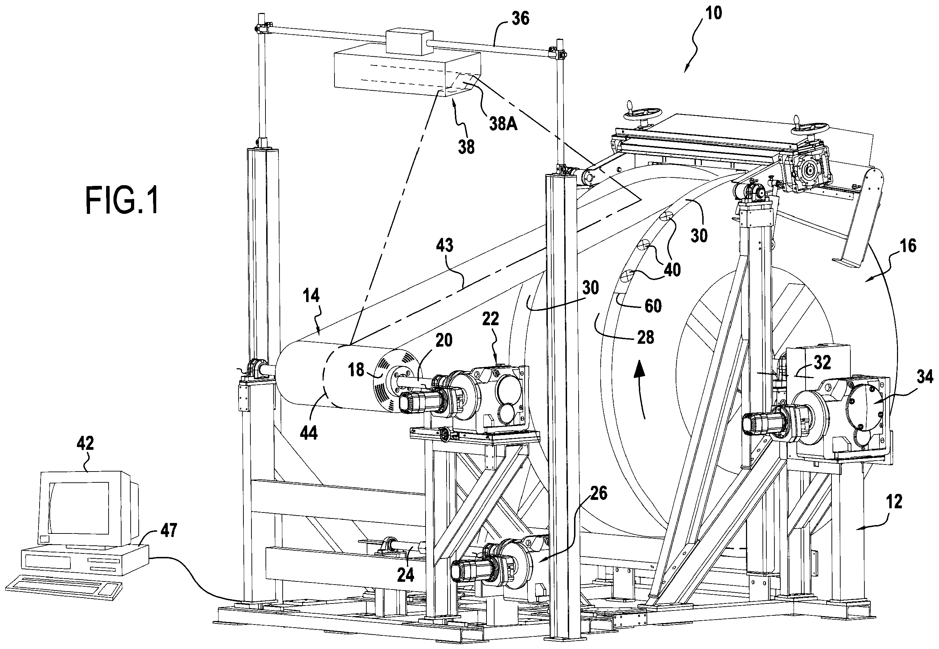

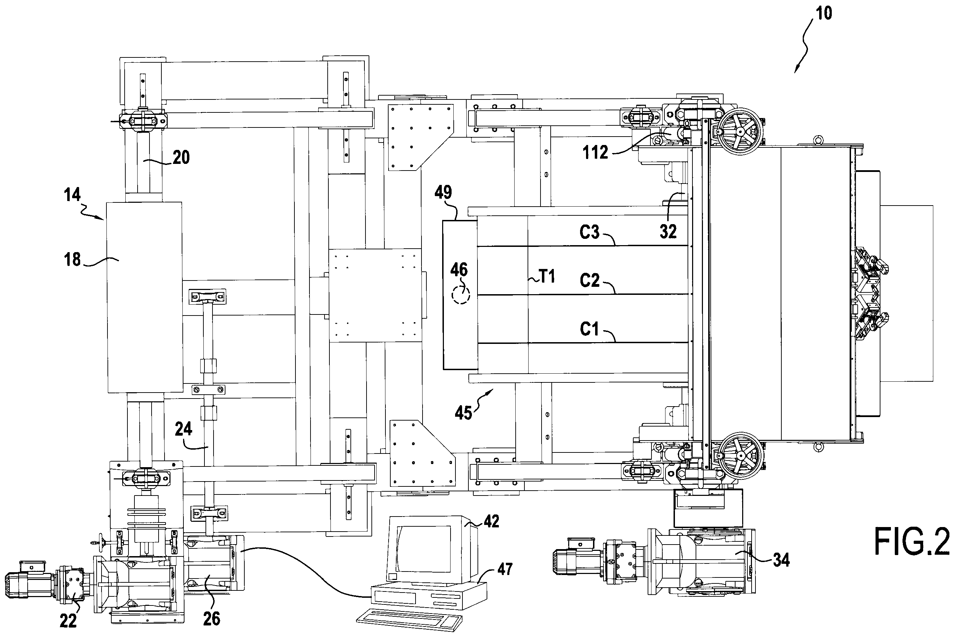

La machine d'enroulement représentée sur les figures 1 et 2 et objet de la présente invention a pour fonction de permettre un transfert automatisé de la texture fibreuse stockée sur le mandrin d'appel vers le mandrin d'imprégnation du moule d'injection de résine tout en assurant un contrôle en temps réel de l'alignement et d'un éventuel décadrage de cette texture fibreuse.

Il est à noter que cette machine d'enroulement ne s'applique pas qu'aux textures fibreuses obtenues exclusivement par tissage tridimensionnel comme celle décrite ci-après.

La machine d'enroulement 10 selon l'invention comprend un bâti 12 supportant notamment un mandrin d'appel 14 et un mandrin d'imprégnation 16. Ces mandrins sont amovibles, c'est-à-dire qu'ils peuvent être démontés du bâti. Le mandrin d'appel 14 reçoit la texture fibreuse 18 obtenue par tissage tridimensionnel. Il est porté par un axe horizontal 20 dont une extrémité est montée de façon rotative sur le bâti 12 de la machine d'enroulement et l'autre extrémité est couplée à l'arbre de sortie d'un moteur électrique 22, par exemple un motoréducteur électrique à courant alternatif.

L'ensemble constitué du mandrin d'appel 14, de son axe 20 et de son moteur électrique 22 peut translater par rapport au bâti le long de l'axe de rotation du mandrin d'appel. Pour ce faire, une tige 24 de type vis sans fin est couplée à l'arbre de sortie d'un moteur électrique 26, par exemple un motoréducteur électrique à courant alternatif et comporte une extrémité fixée sur le bâti 12 de la machine d'enroulement et l'autre extrémité solidarisée au mandrin d'appel 14. Ce degré de liberté en translation du mandrin d'appel permet de réaliser un alignement de ce mandrin sur le mandrin d'imprégnation préalablement à l'enroulement de la texture fibreuse sur le mandrin d'imprégnation comme au cours de cet enroulement.

Le mandrin d'imprégnation 16 de la machine d'enroulement selon l'invention est destiné à recevoir en couches superposées la texture fibreuse dévidée depuis le mandrin d'appel. Il présente une surface extérieure 28 dont le profil correspond à celui de la surface interne du carter à réaliser et deux flasques latéraux 30.

Le mandrin d'imprégnation est porté par un axe horizontal 32 qui est parallèle à l'axe de rotation 20 du mandrin d'appel et dont l'une extrémité est montée de façon rotative sur le bâti 12 de la machine d'enroulement et l'autre extrémité est couplée à l'arbre de sortie d'un moteur électrique 34, par exemple un motoréducteur électrique à courant alternatif.

Une unité de commande 42 est reliée aux moteurs électriques 22, 26, 34 des deux mandrins 14, 16 et de la vis sans fin 24 pour commander et contrôler la vitesse de rotation de chaque mandrin comme la translation du mandrin d'appel. De manière plus générale, cette unité de commande permet de piloter l'ensemble des paramètres de fonctionnement de la machine d'enroulement à la fois lors de la mise en place de la texture fibreuse (phase d'étalonnage) et puis au cours de l'enroulement (phase de pilotage automatique), comme il sera décrit plus avant.

Selon le mode de réalisation envisagé, l'étalonnage de la machine d'enroulement peut être réalisé au moyen d'un équipement de projection laser tel qu'illustré à la figure 1 ou au moyen d'un outillage de calibration tel qu'illustré à la figure 2.

Dans le premier mode de réalisation, le bâti 12 de la machine d'enroulement 10 peut supporter un portique 36 sur lequel est monté fixement, sensiblement à la verticale du mandrin d'appel, un équipement de projection laser 38. On notera toutefois que cet équipement pourrait aussi bien être installé au plafond de l'atelier recevant la machine d'enroulement sous réserve qu'il soit disposé au-dessus d'elle. En liaison avec des cibles réfléchissantes 40, au nombre de six pour permettre une localisation en trois dimensions, fixées dans l'épaisseur des deux flaques latéraux 30 du mandrin d'imprégnation 16, cet équipement de projection laser permet d'assurer un alignement automatique du mandrin d'appel sur le mandrin d'imprégnation préalablement à l'enroulement de la texture fibreuse sur le mandrin d'imprégnation, comme une surveillance visuelle par l'opérateur de cet alignement au cours de l'enroulement.

Plus précisément, cet équipement de projection laser se présente sous la forme connue d'un boitier allongé comportant une source laser à l'intensité contrôlée dont le faisceau traverse des moyens optiques de collimation pour aboutir sur deux dispositifs scanner à miroirs (DMD) disposés l'un dans l'axe de ce faisceau et l'autre perpendiculairement et qui vont au travers d'un hublot de sortie 38A rediriger ce faisceau vers la texture fibreuse en un point lumineux déterminé selon la commande qui en aura été faite par l'unité de commande 42 au niveau de chacun des miroirs de ces dispositifs et relevée au niveau d'un capteur optique de cet équipement. Ainsi, bien qu'à chaque instant, l'équipement ne projette qu'un seul point lumineux, du fait de la très grande rapidité de déplacement des miroirs (typiquement toutes les 100 microsecondes), il peut être produit l'apparence soit d'une ligne continue sur la texture fibreuse à partir de laquelle l'alignement automatique initial recherché pourra donc être réalisé soit de plusieurs pour une surveillance par l'opérateur de cet alignement au cours de l'enroulement. Un tel équipement de projection est disponible par exemple auprès de la société canadienne VIRTEK.

L'alignement initial du mandrin d'appel 14 sur le mandrin d'imprégnation 16 préalablement à l'enroulement automatique de la texture fibreuse se déroule de la manière suivante.

Tout d'abord, il est nécessaire de mettre en place, sur le mandrin d'imprégnation 16, plus précisément sur ses flasques latéraux 30, les six cibles réfléchissantes 40 pour permettre à l'équipement de projection laser 38 de détecter automatiquement la position dans l'espace de ce mandrin d'imprégnation lors de la mise en route de l'équipement. En effet, cette mise en route va provoquer le déplacement des dispositifs à miroirs de l'équipement de projection laser jusqu'à aligner son faisceau laser successivement sur chacune des cibles pour en assurer la localisation. Une fois ces cibles précisément localisées, la position dans l'espace du mandrin d'imprégnation sera parfaitement connue de l'équipement de projection laser qui pourra alors projeter une ligne de référence d'alignement 43 sur la texture fibreuse comportant un fil de chaîne particulier 44 (appelé fil traceur) co-tissé avec les fibres en carbone de la préforme que l'opérateur se chargera de faire coïncider avec cette ligne de référence projetée lors de la mise en place initiale de cette texture fibreuse sur le mandrin d'imprégnation. Si nécessaire, le mandrin d'appel 14 est translaté le long de son axe de rotation par action sur le moteur électrique 26 ou, si elle est présente, par actionnement d'une manivelle. Une fois le mandrin d'appel correctement aligné sur le mandrin d'imprégnation, l'extrémité libre de la texture fibreuse du mandrin d'appel est fixée par l'opérateur sur le mandrin d'imprégnation pour permettre alors le lancement de la phase de pilotage automatique de l'enroulement.

Dans le second mode de réalisation de la figure 2, l'étalonnage n'est plus effectué par projection laser mais par simulation des fils traceurs. Pour ce faire, un outillage de calibration de forme identique au mandrin d'imprégnation mais comportant à sa surface des lignes de références C1, C2, C3, T1 représentant les positions théoriques souhaitées de ces fils traceurs est disposé en lieu et place du mandrin d'imprégnation et une caméra 46 dirigée vers cet outillage de calibration (ou mandrin de calibration 45) et disposée avantageusement sur un montant 48 s'étendant depuis le socle du bâti 12, est chargée d'enregistrer des images de ce mandrin de calibration et de détecter à partir de ces images ces lignes de référence pour en permettre l'affichage au niveau de l'écran de contrôle de l'unité de commande 42. Cette phase d'étalonnage terminée, le mandrin d'imprégnation peut venir remplacer le mandrin de calibration et l'extrémité libre de la texture fibreuse extraite du mandrin d'appel est fixée par l'opérateur sur le mandrin d'imprégnation.

Quel que soit le type d'étalonnage retenu, les moteurs électriques d'entraînement en rotation des mandrins d'appel et d'imprégnation sont alors activés et pilotés par l'unité de commande 42 pour déclencher le processus d'enroulement automatique en couches superposées de la texture fibreuse sur ce mandrin d'imprégnation tout en appliquant une tension d'enroulement adéquate sur la texture fibreuse.

A cet effet, une tension de consigne est prédéfinie en fonction notamment de la nature de la texture fibreuse et est appliquée au mandrin qui offre le couple résistant à l'enroulement, à savoir généralement le mandrin d'appel. Plus précisément, la tension de consigne est entrée dans l'unité de commande qui la traduit en une valeur de consigne pour le courant d'induction du moteur électrique du mandrin d'appel au moyen d'un algorithme de calcul adéquat. La tension effectivement appliquée peut être mesurée par des capteurs de type connu, comme des capteurs de roulement, montés sur des rouleaux suiveurs disposés par exemple entre le mandrin d'appel et le mandrin d'imprégnation ou par un contrôle du courant d'induction du moteur électrique du mandrin d'appel.

L'algorithme de calcul permettant d'associer à une valeur de tension de consigne une valeur de courant d'induction du moteur électrique du mandrin d'appel (lorsque celui-ci est résistant) est préalablement élaboré en prenant notamment en compte le rayon moyen de ce mandrin. L'algorithme peut être réévalué si besoin lorsque des écarts apparaissent entre la tension de consigne et une tension réelle mesurée lors des opérations de maintenance à l'aide d'un dynamomètre relié par des sangles au mandrin d'appel et au mandrin d'imprégnation.

Il est à noter que la tension de consigne varie en fonction notamment de la nature de fibres constituant la texture fibreuse à enrouler sur le mandrin d'imprégnation et des paramètres utilisés pour son tissage.

A titre d'exemple, pour une texture fibreuse constituée d'un tissu multicouche tridimensionnel de type Interlock en fibres de carbone à module intermédiaire, on appliquera une tension de consigne de l'ordre de 6000 N avec une vitesse de défilement du tissu lors de son enroulement comprise entre 200 et 400 mm/min. De telles valeurs permettent d'obtenir, pour la texture fibreuse particulière, un niveau adéquat de compactage des couches de texture fibreuse superposées sur le mandrin d'imprégnation. Il en résulte, pour la préforme finale obtenue à l'issue de l'étape ultérieure d'imprégnation par résine, un taux de fibres maîtrisé.

Selon l'invention, il est prévu de corriger automatiquement tout défaut d'alignement du mandrin d'appel sur le mandrin d'imprégnation survenant au cours de l'opération d'enroulement de la texture fibreuse sur le mandrin d'imprégnation.

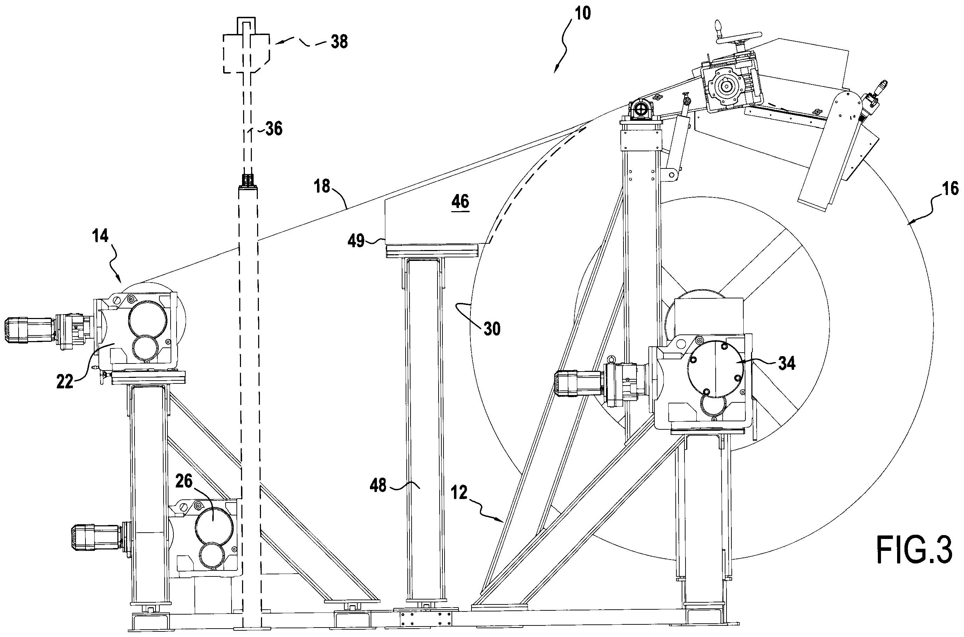

A cet effet, et comme illustré à la figure 3, la caméra 46 dirigée de préférence sous la texture fibreuse en cours d'enroulement, à la fois vers la texture fibreuse 18 et le mandrin d'imprégnation 16, va enregistrer en continue le défilement des fils traceurs de cette texture fibreuse. De préférence, la caméra est intégrée dans une boite à lumière 49 ajustée au profil du mandrin et placée au plus près de la texture fibreuse. Cette disposition permet en effet d'optimiser le contraste entre les fils traceurs constitués de torons de fibres de verre ou d'un assemblage verre-carbone et la texture fibreuse constituée seulement de fibres de carbone en évitant les éclairages ambiants ou parasites de l'atelier au-dessus de la machine. La caméra 46 est reliée à l'unité de commande 42 de la machine d'enroulement qui comporte un module logiciel d'analyse d'images 47 pour traiter les images numériques provenant de la caméra au cours de l'opération d'enroulement de la texture fibreuse.

Ce logiciel analyse en continu et en temps réel les images de la texture fibreuse pour mesurer en cours d'enroulement l'écart de position entre une position de référence (ou position théorique d'alignement) et la position réelle du ou des traceurs de chaine 44 présents sur la texture fibreuse. Le référentiel de contrôle est paramétrable au niveau du logiciel d'analyse d'images. Il intègre le choix du ou des traceurs à surveiller ainsi de la tolérance de position autorisée. La valeur de cette tolérance est de préférence renseignée en millimètre.

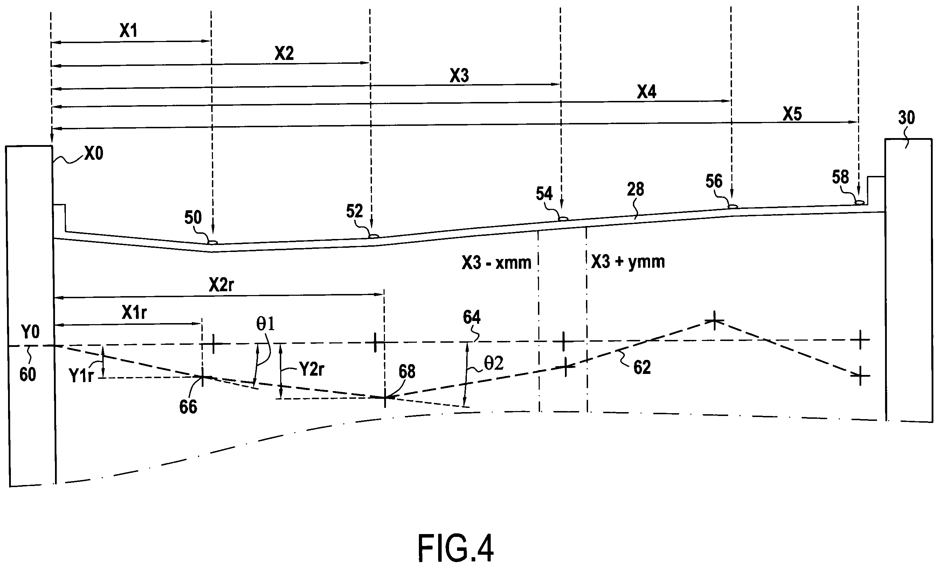

La figure 4 montre une texture fibreuse 18 comportant cinq fils traceurs de chaine 50, 52, 54, 56, 58 dont les positions théoriques X1, X2, X3, X4, X5 sont définies par rapport à une cible gravée ou usinée sur le mandrin d'imprégnation ou de préférence constituée par une particularité géométrique de ce mandrin, comme le bord intérieur d'un flasque latéral 30 (référence X0) que le logiciel d'analyse d'image est capable aisément de reconnaitre.

Par exemple, s'il est décidé d'utiliser la position théorique X3 du troisième traceur de chaine 54 pour assurer le suivi de l'alignement, il conviendra de paramétrer un écart de position autorisé de part et d'autre de cette position théorique (± x y mm). Ainsi, le système autorisera la poursuite de l'enroulement sans correction de position tant que le fil traceur restera dans un écart compris entre (X3-x mm) et (X3+y mm), x et y pouvant être égaux ou non. L'écart de position sera relevé à une fréquence d'échantillonnage paramétrable (par exemple : 1/30ème à ¼ de tour ou tous les z mm de défilement linéaire).

On notera que dans le cadre du mode de réalisation de la figure 2, la référence d'alignement n'est plus constituée par une particularité du mandrin mais par la ou les positions théoriques de fils traceurs de chaine et de trame de référence C1, C2, C3, T1 enregistrées lors de la phase précitée d'étalonnage. Lorsqu'un seul fil traceur est utilisé pour l'alignement (la position des autres fils traceurs est bien entendu enregistrée même si elle n'est prise en compte pour cet alignement), il est de préférence situé dans une zone particulière de la texture fibreuse, par exemple la zone de rétention.

L'autorisation de poursuite pourra cependant être paramétrée plus finement pour permettre des corrections intermédiaires en fonction du % d'écart mesuré par rapport à la position théorique en intégrant une fonction PID, dans la commande de la correction de position. Par exemple, tant que l'écart de position est inférieur à 25% de l'intervalle de tolérance (soit 1 mm pour un écart identique de 4 mm par exemple), aucune compensation de trajectoire n'est nécessaire. Au-delà d'un écart de 25%, une correction de trajectoire est réalisée en corrigeant la position du mandrin d'appel 14. La fonction PID devra tenir compte du temps de réponse du système de correction pour poursuivre ou non l'ajustement de la position de ce mandrin d'appel afin d'éviter d'entretenir un déséquilibre de position en + ou - autour de la valeur cible.

Cette sensibilité de l'ajustement de position pourra être paramétrée par exemple en seconde, c'est-à-dire que le logiciel d'analyse d'images prendra en compte les valeurs mesurées toutes les k secondes, pour le calcul de la valeur de la correction. La plage de réglage de ce délai sera paramétrable de 0 à 30 secondes par exemple, sans toutefois dépasser le temps nécessaire à la machine pour réaliser ½ tour d'enroulement.

La correction de la position du mandrin d'appel est obtenue par translation de son châssis support, mis en mouvement par l'intermédiaire de la vis sans fin motorisée 24. Les données nécessaires à la correction de position seront directement issues du logiciel d'analyse d'images et converties en signaux permettant la commande du moteur électrique 26 de déplacement de cette vis sans fin. Ce logiciel permettra également d'éditer un rapport de contrôle qui détaillera pour l'ensemble de l'opération d'enroulement, la valeur des corrections apportée à la position du mandrin d'appel.

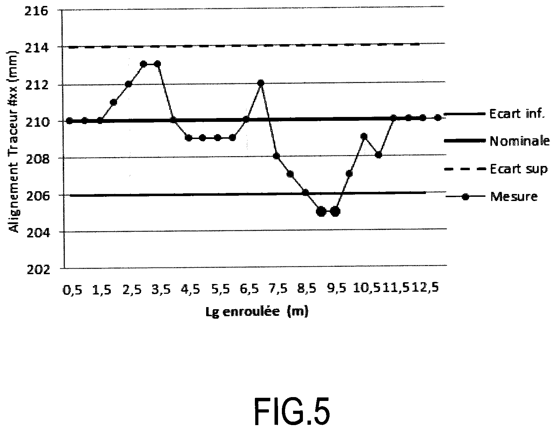

Dans l'exemple de rapport de contrôle illustré à la figure 5, le graphe montre la position de l'alignement par exemple du fil traceur 54 tous les 0,5 mètre au cours de l'enroulement. Les points les plus gros montrent les mesures hors tolérance qui, dans ce cas, au nombre de deux montrent un désalignement qui n'a pas pu être corrigé momentanément pas le système de correction. Ces points sont ainsi clairement identifiés dans le rapport de contrôle afin de permettre à l'inspecteur qui vérifiera la qualité de la préforme finie de se prononcer sur l'acceptabilité de l'opération d'enroulement.

Toutefois, ce contrôle de l'alignement de la texture fibreuse au cours de l'enroulement n'est pas suffisant pour garantir que la préforme finie est conforme aux spécifications exigées. Il est en effet aussi nécessaire de mesurer en permanence le décadrage de la texture fibreuse en scrutant l'évolution de la rectitude des fils de trame au cours de l'enroulement.

Conformément à l'invention, cette fonctionnalité est assurée par la même caméra 46 et le même module logiciel d'analyse d'images utilisés pour la correction de l'alignement de la texture fibreuse.

On rappellera que la valeur du décadrage s'exprime en degré par rapport à l'alignement théorique (sens axial) des traceurs de trame. Afin de caractériser la valeur du décadrage, le logiciel d'analyse d'images permet de mesurer la position des intersections des traceurs de chaîne avec les traceurs de trame. La position théorique des intersections est définie par les coordonnées (Xn,Yn), les origines X0 et Y0 étant prises pour le mode de réalisation de la figure 1, sur des points de référence du mandrin d'imprégnation 16 (le bord intérieur du flasque latéral 30 comme indiqué précédemment pour l'origine X0 et une ligne gravée 60 sur ce flasque latéral pour la référence Y0) et pour le mode de réalisation de la figure 2, sur une ligne de référence horizontale du traceur de trame T1 du mandrin de calibration 45. La référence Y0 correspond au positionnement du premier traceur de trame situé au début de l'enroulement. La position des traceurs de trame suivants peut être exprimée en distance linéaire par rapport à la position de départ Y0 ou en position angulaire entre le départ de l'enroulement et la fin de cet enroulement après 4 tours.

Le logiciel d'analyse d'images permet en cours d'enroulement d'identifier chaque traceur de trame 62 lorsqu'il arrive dans la fenêtre de scrutation de la caméra 46 et de mesurer pour chaque intersection de traceur trame/chaîne, l'écart mesuré par rapport à la position théorique d'un traceur de trame de référence 64 ainsi que la valeur du décadrage. Il permet en outre d'informer en temps réel l'opérateur de la valeur de décadrage afin de permettre à celui-ci d'identifier une éventuelle dérive du l'opération d'enroulement. S'il le souhaite l'opérateur peut éventuellement corriger ce décadrage en faisant varier la consigne de tension sur la préforme en + ou - en fonction de la localisation du décadrage maximal. Par exemple, s'il est noté une zone de décadrage due à une pic de tension dans la préforme, l'opérateur peut, dans la mesure où la consigne de tension reste dans la tolérance de fabrication souhaitée de par exemple +/- 10%, réduire la consigne de tension pour réduire le décadrage. Une alarme visuelle ou sonore permet avantageusement de signaler rapidement à l'opérateur une telle dérive dans l'enroulement.

Revenons à la figure 4, la valeur de décadrage au point d'intersection réel 66 entre le premier traceur chaine et le premier traceur trame, sera donnée en degré (θ1) par rapport à l'orientation théorique de ce premier traceur de trame. La valeur du décadrage au point d'intersection réel 68 entre le second traceur chaine et le premier traceur trame sera donnée pareillement en degré (θ2) correspondant à l'écart d'orientation du fil de trame compris entre le point réel 66 et le point réel 68, toujours par rapport à l'orientation théorique du traceur de trame.

De même que pour le suivi de l'alignement, le logiciel d'analyse d'images permet également d'éditer un rapport de contrôle qui détaille pour chaque traceur de trame, la position réelle de l'intersection et l'angle de décadrage, montrant ainsi l'évolution du décadrage au cours de l'ensemble de l'opération d'enroulement, cette mesure étant absolument nécessaire pour statuer sur la qualité finale de la préforme après enroulement. L'enregistrement ainsi réalisé permettra de se prononcer sur l'acceptabilité ou non de la préforme pour la suite du processus de fabrication du carter.

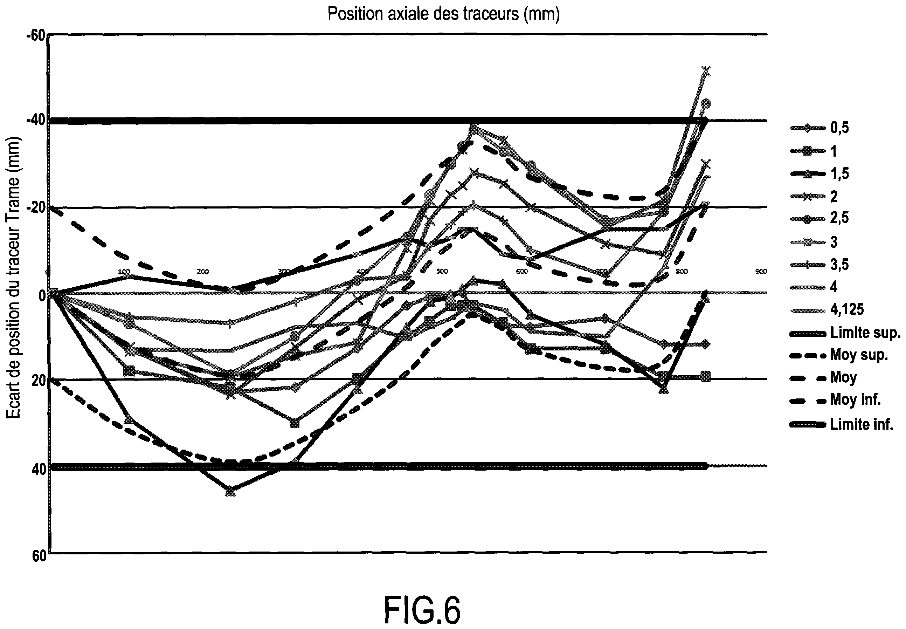

Dans l'exemple de rapport de contrôle illustré à la figure 6, le graphe montre le décadrage que le logiciel d'analyse d'images est capable de générer en temps réel. Les limites sup. et inf. nous indiquent l'écart maxi et mini autorisé par rapport à la position théorique d'un traceur de trame d'une texture fibreuse ne subissant pas de décadrage, soit par exemple ± 40 mm. La moyenne sup. et inf. donne la limite de dispersion autorisée de l'ensemble des traceurs autour de la position moyenne des traceurs prise à une même position axiale, soit par exemple ± 20 mm. Ces valeurs des limites et moyenne sup. et inf. sont bien évidemment paramétrables.

On notera que si la description qui précède n'a montré qu'un mandrin d'appel, il est clair que la machine d'enroulement selon l'invention peut aussi comporter un mandrin supplémentaire sur lequel est stocké un tissu fibreux de renfort porté par un axe horizontal parallèle aux axes de rotation respectifs des mandrins d'appel et d'imprégnation et qui sera enroulé en synchronisme avec la texture fibreuse. Ce tissu fibreux de renfort peut être par exemple un tissu multicouche tridimensionnel de type Interlock en fibres de carbone à module intermédiaire ou tout autre renfort fibreux tissé, tressé ou unidirectionnel.

Pour faciliter la mise en forme et le compactage sur le mandrin d'imprégnation, la machine d'enroulement peut aussi comporter des unités de chauffage (par rayonnement ou soufflage d'air chaud par exemple) et des moyens de pulvérisation de la texture fibreuse préalablement à son accostage sur le mandrin d'imprégnation.

Enfin, on notera que si la présente description s'est intéressée essentiellement à une machine d'enroulement, il est clair que le procédé de l'invention de contrôle de l'alignement et du décadrage des traceurs sur la texture fibreuse trouve aussi application à la surveillance du tissage préalable de cette texture sur une machine ou métier à tisser en aval de son mandrin de tirage (dit « pull »), en équipant simplement ce métier à tisser au niveau d'un de ses autres mandrins, par exemple son mandrin de prise (dit « take-up »), d'une caméra et de son module d'analyse d'images associé.

## Revendications

1. Machine d'enroulement (10) d'une texture fibreuse sur un mandrin d'imprégnation, comprenant :
un mandrin d'appel (14) apte à stocker et dévider une texture fibreuse (18), le mandrin d'appel ayant un axe de rotation (20) sensiblement horizontal ;
un mandrin d'imprégnation (16) apte à recevoir en couches superposées la texture fibreuse dévidée depuis le mandrin d'appel, le mandrin d'imprégnation ayant un axe de rotation (32) sensiblement horizontal et parallèle à l'axe de rotation du mandrin d'appel ;
une caméra (46) montée dans une boite à lumière (49) ajustée au profil dudit mandrin d'imprégnation et placée au plus près de ladite texture fibreuse et apte, en étant dirigée vers la texture fibreuse et le mandrin d'imprégnation, à scruter le passage de fils traceurs de chaine (50, 52, 54, 56, 58) et de trame (64) présents dans la texture fibreuse ;
un module d'analyse d'images (47) apte tout d'abord à déterminer les positions des intersections des fils traceurs de chaine avec les fils traceurs de trame successifs puis à comparer ces positions déterminées avec des positions théoriques correspondantes d'intersections de fils traceurs de chaine et de trame de référence (66) et enfin à déterminer une valeur de décadrage de la texture fibreuse pour chacune de ces intersections ;
des moteurs électriques (22, 34) apte à entraîner en rotation les mandrins autour de leur axe de rotation respectif ; et
une unité de commande (42) des moteurs électriques d'entraînement en rotation des mandrins.

2. Machine selon la revendication 1, dans laquelle l'unité de commande des moteurs électriques comprend des moyens de contrôle de la tension de la texture fibreuse.

3. Machine selon l'une des revendications 1 et 2, dans laquelle le module d'analyse d'images est agencé pour enregistrer lesdites positions théoriques d'intersections de fils traceurs de chaine de trame de référence détectées, lors d'une phase d'étalonnage préalable à l'enroulement automatique de ladite texture fibreuse, par ladite caméra sur un mandrin de calibration (45) marqué de fils traceurs de chaine de trame de référence (C1, C2, C3, T1).

4. Machine selon l'une quelconque des revendications 1 à 3, dans laquelle le module d'analyse d'images est agencé pour déterminer en outre un écart de position entre une position de référence d'alignement et la position relevée par la caméra d'au moins un fil traceur de chaine et pour autoriser ou non la poursuite de l'enroulement selon que la position relevée du fil traceur reste ou non dans un intervalle de tolérance prédéterminé.

5. Machine selon la revendication 4, dans laquelle l'unité de commande est agencée pour effectuer une correction de l'alignement au cours de l'opération d'enroulement en corrigeant la position du mandrin d'appel lorsque l'écart de position déterminé est supérieur à 25% de l'intervalle de tolérance prédéterminé.

6. Machine selon la revendication 5, dans laquelle la correction de la position du mandrin d'appel est assurée par une vis sans fin motorisée (24, 26) solidarisée à ce mandrin d'appel.

7. Procédé de détermination d'une valeur de décadrage d'une texture fibreuse (18) enroulée en couches superposées sur un second mandrin (16) d'une machine comportant un premier mandrin (14) pour stocker et dévider cette texture fibreuse (18), le premier mandrin ayant un axe de rotation (20) sensiblement horizontal et parallèle à un axe de rotation du second mandrin, et les premier et second mandrins étant entrainés autour de leur axe de rotation respectif par des moteurs électriques (22, 34) actionnés par une unité de commande (42) ; procédé dans lequel une caméra (46) montée dans une boite à lumière (49) ajustée au profil dudit mandrin d'imprégnation et placée au plus près de ladite texture fibreuse, en étant dirigée vers la texture fibreuse et le second mandrin, scrute le passage de fils traceurs de chaîne (50, 52, 54, 56, 58) et de trame (64) présents dans la texture fibreuse et un module d'analyse d'images (47) détermine tout d'abord les positions des intersections des fils traceurs de chaine avec les fils traceurs de trame successifs puis compare ces positions déterminées avec des positions théoriques correspondantes d'intersections de fils traceurs de chaine et de trame de référence (66) détectées, lors d'une phase d'étalonnage préalable à l'enroulement automatique de ladite texture fibreuse, par ladite caméra sur un mandrin de calibration (45) marqué de fils traceurs de chaine et de trame de référence (C1, C2, C3, T1) et enregistrées dans ledit module d'analyse d'images et enfin détermine une valeur de décadrage de la texture fibreuse pour chacune de ces intersections.

8. Procédé selon la revendication 7, dans lequel lesdits premier et second mandrins sont respectivement des mandrins d'appel et d'imprégnation d'une machine d'enroulement.

9. Procédé selon la revendication 7, dans lequel lesdits premier et second mandrins sont respectivement des mandrins de tirage et de prise d'une machine (ou métier) à tisser.

## Patentansprüche

1. Maschine zum Aufwickeln (10) einer Faserstruktur auf einen Imprägnierdorn, umfassend:
einen Abrufdorn (14), der geeignet ist, eine Faserstruktur (18) zu lagern und abzuwickeln, wobei der Abrufdorn eine im Wesentlichen horizontale Rotationsachse (20) hat,
einen Imprägnierdorn (16), der geeignet ist, die von dem Abrufdorn abgewickelte Faserstruktur in übereinander angeordneten Lagen aufzunehmen, wobei der Imprägnierdorn eine im Wesentlichen horizontale und zu der Rotationsachse des Abrufdorns parallele Rotationsachse (32) hat,
eine Kamera (46), die in einer Leuchtbox (49), welche dem Profil des Imprägnierdorns angepasst und möglichst nahe der Faserstruktur angeordnet ist, angebracht und geeignet ist, in Richtung der Faserstruktur und des Imprägnierdorns ausgerichtet den Durchgang von Kett- (50, 52, 54, 56, 58) und Schuss-Tracerfäden (64), welche in der Faserstruktur vorhanden sind, abzutasten,
ein Bildanalysemodul (47), das zunächst geeignet ist, die Positionen der Schnittpunkte der Kett-Tracerfäden mit den aufeinanderfolgenden Schuss-Tracerfäden zu bestimmen, dann diese bestimmten Positionen mit entsprechenden Soll-Positionen von Schnittpunkten von Referenz-Kett- und -Schuss-Tracerfäden (66) zu vergleichen und schließlich einen Versatzwert der Faserstruktur für jeden dieser Schnittpunkte zu bestimmen,
Elektromotoren (22, 34), die geeignet sind, die Dorne um ihre jeweilige Rotationsachse drehend anzutreiben, und
eine Einheit zum Steuern (42) der Elektromotoren zum Drehantreiben der Dorne.

2. Maschine nach Anspruch 1, bei der die Einheit zum Steuern der Elektromotoren Mittel zur Steuerung der Spannung der Faserstruktur umfasst.

3. Maschine nach einem der Ansprüche 1 und 2, bei der das Bildanalysemodul dazu eingerichtet ist, die Soll-Positionen von Schnittpunkten von Referenz-Kett- und - Schuss-Tracerfäden, welche während einer Kalibrierphase vor dem automatischen Aufwickeln der Faserstruktur durch die Kamera an einem mit Referenz-Kett- und - Schuss-Tracerfäden (C1, C2, C3, T1) markierten Kalibrierdorn (45) erfasst werden, aufzuzeichnen.

4. Maschine nach einem der Ansprüche 1 bis 3, bei der das Bildanalysemodul dazu eingerichtet ist, ferner eine Positionsabweichung zwischen einer Ausrichtungsrefrenzposition und der durch die Kamera aufgenommenen Position wenigstens eines Kett-Tracerfadens zu bestimmen, und die Fortführung des Aufwickelns zuzulassen oder nicht, je nachdem, ob die aufgenommene Position des Tracerfadens in einem vorbestimmten Toleranzbereich bleibt oder nicht.

5. Maschine nach Anspruch 4, bei der die Steuereinheit dazu eingerichtet ist, eine Korrektur der Ausrichtung im Laufe des Aufwickelvorgangs durch Korrigieren der Position des Abrufdorns durchzuführen, wenn die Positionsabweichung mehr als 25 % des vorbestimmten Toleranzbereiches beträgt.

6. Maschine nach Anspruch 5, bei der die Korrektur der Position des Abrufdorns durch eine motorisierte Schnecke (24, 26), welche mit diesem Abrufdorn fest verbunden ist, sichergestellt wird.

7. Verfahren zur Bestimmung eines Versatzwertes einer Faserstruktur (18), die in übereinander angeordneten Lagen auf einem zweiten Dorn (16) einer Maschine aufgewickelt ist, welche einen ersten Dorn (14) zur Lagerung und zum Abwickeln dieser Faserstruktur (18) umfasst, wobei der erste Dorn eine im Wesentlichen horizontale und zu einer Rotationsachse des zweiten Dorns parallele Rotationsachse (20) aufweist, und wobei der erste und der zweite Dorn im ihre jeweilige Rotationsachse durch Elektromotoren (22, 34), welche über eine Steuereinheit (42) betätigt werden, angetrieben werden, Verfahren, bei dem eine Kamera (46), die in einer Leuchtbox (49), welche dem Profil des Imprägnierdorns angepasst und möglichst nahe der Faserstruktur angeordnet ist, angebracht und dabei in Richtung der Faserstruktur und des zweiten Dorns ausgerichtet ist, den Durchgang von Kett- (50, 52, 54, 56, 58) und Schuss-Tracerfäden (64), welche in der Faserstruktur vorhanden sind, abtastet, und ein Bildanalysemodul (47) zunächst die Positionen der Schnittpunkte der Kett-Tracerfäden mit den aufeinanderfolgenden Schuss-Tracerfäden bestimmt, dann diese bestimmten Positionen mit entsprechenden Soll-Positionen von Schnittpunkten von Referenz-Kett- und -Schuss-Tracerfäden (66), welche während einer Kalibrierphase vor dem automatischen Aufwickeln der Faserstruktur durch die Kamera an einem mit Referenz-Kett- und -Schuss-Tracerfäden (C1, C2, C3, T1) markierten Kalibrierdorn (45) erfasst und in dem Bildanalysemodul aufgezeichnet werden, vergleicht und schließlich einen Versatzwert der Faserstruktur für jeden dieser Schnittpunkte bestimmt.

8. Verfahren nach Anspruch 7, bei dem die ersten und zweiten Dorne Abruf- bzw. Imprägnierdorne einer Wickelmaschine sind.

9. Verfahren nach Anspruch 7, bei dem die ersten und zweiten Dorne Zug- bzw. Aufnahmedorne einer Webmaschine (oder -stuhls) sind.

## Claims

1. A machine (10) for winding a fiber texture onto an impregnation mandrel, the machine comprising:
. a take-up mandrel (14) suitable for storing and unwinding a fiber texture (18), the take-up mandrel having a substantially horizontal axis of rotation (20);
. an impregnation mandrel (16) suitable for receiving superposed layers of the fiber texture unwound from the take-up mandrel, the impregnation mandrel having an axis of rotation (32) that is substantially horizontal and parallel to the axis of rotation of the take-up mandrel;
. a camera (46) mounted in a light box (49) that is adjusted to the profile of said impregnation mandrel and placed as close as possible to said fiber texture, and suitable, being directed towards the fiber texture and the impregnation mandrel, for examining the passage of warp tracer yarns (50, 52, 54, 56, 58) and weft tracer yarns (64) present in the fiber texture;
. an image-analysis module (47) suitable for initially determining the positions of the intersections of warp tracer yarns with the successive weft tracer yarns and then for comparing these determined positions with corresponding theoretical positions for the intersections of reference warp and weft (66) tracer yarns, and finally, for determining an offset value for the fiber texture for each of these intersections;
. electric motors (22, 34) suitable for driving the mandrels in rotation about their respective axes of rotation; and
. a control unit (42) suitable for controlling the electric motors for driving rotation of the mandrels.

2. A machine according to claim 1, wherein the control unit for controlling the electric motors includes monitoring means for monitoring the tension of the fiber texture.

3. A machine according to claim 1 and claim 2, wherein the image-analysis module is arranged for recording said theoretical positions for the intersections of reference warp and weft tracer yarns as detected, during a calibration stage prior to automatic winding of said fiber texture, by said camera acting on a calibration mandrel (45) marked with reference warp and weft tracer yarns (C1, C2, C3, T1),.

4. A machine according to any one of claims 1 to 3, wherein the image-analysis module is further arranged for determining a position error between a reference alignment position and the position observed by the camera of at least one warp tracer yarn and for optionally allowing continuation of winding depending on whether or not the observed position of the tracer yarn remains within a predetermined tolerance range.

5. A machine according to claim 4, wherein the control unit is arranged for performing a correction of the alignment during the winding operation by correcting the position of the take-up mandrel when the given position error is greater than 25% of the predetermined tolerance range.

6. A machine according to claim 5, wherein the position of the take-up mandrel is corrected by a motorized wormscrew (24, 26) secured to this take-up mandrel.

7. A method of determining an offset value for a fiber texture (18) wound in superposed layers onto a second mandrel (16) of a machine including a first mandrel (14) for storing and unwinding said fiber texture (18), the first mandrel having an axis of rotation (20) that is substantially horizontal and parallel to an axis of rotation of the second mandrel, and the first and second mandrels being driven about their respective axes of rotation by electric motors (22, 34) actuated by a control unit (42); in which method a camera (46) mounted in a light box (49) that is adjusted to the profile of said impregnation mandrel and placed as close as possible to said fiber texture, being directed towards the fiber texture and the second mandrel, examines the passage of warp tracer yarns (50, 52, 54, 56, 58) and weft tracer yarns (64) that are present in the fiber texture and an image-analysis module (47) firstly determines the positions of the intersections of the warp tracer yarns with the successive weft tracer yarns and then compares these determined positions with corresponding theoretical positions of the intersections of reference warp and weft (66) tracer yarns, detected during a calibration stage prior to automatic winding of said fiber texture, by said camera on a calibration mandrel (45) marked with reference warp and weft tracer yarns (C1, C2, C3, T1) and recorded in the module, and finally, determines an offset value for the fiber texture for each of these intersections.

8. A method according to claim 7, wherein said first and second mandrels are respectively take-up mandrels and impregnation mandrels for a winding machine.

9. A method according to claim 7, wherein said first and second mandrels are respectively a pull mandrel and a take-up mandrel for a weaving machine (or loom).
